# DEMANDE DE BREVET EUROPEEN

(11) **EP 0 928 564 A1**
(43) Date de publication de la demande: **14.07.1999**
(21) Numéro de dépôt: 97810984.1
(22) Date de dépôt: 16.12.1997
(51) Int. Cl.: A23L 1/236, A23L 2/60

(54) **Sucrant en poudre pour alimentation humaine**

(71) Demandeur: Laboratoires Pancosma S.A., 1218 Le Grand-Saconnex (CH)
(72) Inventeur: Felisaz, Denis, 74100 Annemasse (FR); Jacquier, Yvan, 1206 Geneve (CH)
(74) Mandataire: Moinas, Michel

(57) **Abrégé**

Le sucrant en poudre pour alimentation humaine se présente sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre. Sa granulométrie est notamment comprise entre 10 et 100 µm, avec une répartition gaussienne.

## Description

La présente invention se rapporte à un sucrant en poudre destiné à l'alimentation humaine et trouve un intérêt tout particulièrement dans les aliments contenant des sucrants non caloriques.

Traditionnellement, les sucrants en poudre pour l'alimentation humaine sont composés d'un mélange statistique de plusieurs poudres de granulométries très différentes, à savoir d'édulcorants d'une granulométrie relativement grossière et mélangée à un potentiateur se présentant sous forme d'une poudre beaucoup plus fine. L'édulcorant, c'est-à-dire l'agent qui apporte le goût sucré est habituellement de la saccharine ou du saccharinate de sodium ou de calcium, parfois d'autres édulcorants intenses d'origine naturelle ou artificielle.

Le rôle du potentiateur est double. D'abord, comme son nom l'indique, il a comme effet de prolonger la perception du goût sucré qui, en son absence, serait trop fugitive. Un bon potentiateur, tels que ceux utilisés classiquement, permet d'augmenter la perception sucrée dans le temps d'environ 50 à 80 %. L'autre effet du potentiateur, et non des moindres, est de masquer les goûts secondaires ou parasites de l'édulcorant, par exemple de masquer le goût amer et métallique de la saccharine ou de ses sels de sodium et de calcium.

Afin de lever toute ambiguïté dans la terminologie utilisée ci-après, nous utiliserons le terme de "sucrant" pour désigner le mélange édulcorant/potentiateur, objet de l'invention, ainsi que les produits traditionnels correspondants qui serviront de comparaison, tandis que nous utiliserons l'expression "formulation sucrante" ou "prémélange sucrant", lorsque le sucrant proprement dit est dispersé dans un support. Cette formulation sucrante, en quelque sorte un condiment comme le sel ou le poivre, sera ensuite incorporée dans l'aliment final.

Les sucrants traditionnels sont des mélanges statistiques d'un ou plusieurs édulcorants et d'un ou plusieurs potentiateurs dont, comme déjà indiqué plus haut, les granulométries sont très différentes. Malgré le soin que l'on peut apporter à leur réalisation, il ne peut en résulter que des mélanges présentant une forte hétérogénéité. Pour cette raison, nous les qualifierons par la suite de "sucrants grossiers".

Cette très forte inhomogénéité peut entraîner des variations dans le profil du goût sucré des aliments, une bouchée pouvant présenter un goût sucré à peine perceptible, tandis que la bouchée suivante peut être, elle, trop sucrée voire amère et métallique par suite des difficultés à masquer l'arrière-goût de la saccharine, en dépit de la présence du potentiateur, lorsque celle-ci est en trop forte concentration. Les formulations sucrantes traditionnelles, à base de sucrants grossiers, bien qu'elles soient couramment utilisées à défaut de mieux, ne donnent donc que modérément satisfaction.

Les problèmes évoqués ci-dessus sont résolus par l'invention, de façon étonnamment simple, l'invention consistant à proposer un sucrant en poudre pour l'alimentation humaine sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre.

De préférence, le sucrant en poudre selon l'invention a une granulométrie comprise entre 10 et 100 µm, avec une répartition gaussienne. De préférence aussi, la proportion édulcorant/potentiateur(s) est comprise entre 99,95/0,05 et 85/15, valeurs exprimées en parties pondérales.

Comme indiqué plus haut et comme on le verra plus loin, puisque la proportion de potentiateur par rapport à l'édulcorant est sensiblement constante et égale d'une particule à l'autre, elle se révélera constante dans la formulation sucrante dans laquelle le sucrant aura été dispersé sur un support, et en final dans l'aiment.

On comprendra aisément, dans ces conditions, que le goût sucré sera constant en intensité et dans son profil, sans variation d'une bouchée à l'autre.

Selon une forme d'exécution préférée selon l'invention, le sucrant selon l'invention peut se présenter sous le forme d'une poudre ayant une répartition gaussienne et un diamètre moyen de particules compris entre 10 et 100 µm, comprenant entre 65'000'000 et 85'000'000, par exemple autour de 75'000'000, de particules par gramme, à comparer avec une saccharine de 40-80 Mesh ayant une granulométrie comprise entre 100 et 1000 µm et ne comprenant que de 50'000 à 70'000, en moyenne 60'000 particules environ au gramme.

Comme édulcorants, on peut utiliser, seuls ou en mélanges, le saccharinate de sodium ou de calcium et la saccharine déjà cités, ainsi que d'autres édulcorants tels que l'aspartyl-phénylalanine, l'acésulfame et les cyclamates et le stévioside qui est un glycoside d'origine naturelle.

Comme potentiateur on peut utiliser dans l'alimentation humaine la thaumatine, qui est une protéine d'origine végétale, des glycosides tels que la néohespéridine dihydrochalcone (NHDC), la glycyrrhizine, etc., seuls ou en mélanges. Ces substances assurent une très grande rémanence au goût sucré et couvrent bien l'arrière-goût amer et métallique de la saccharine et de ses sels.

Le sucrant en poudre selon l'invention peut contenir également d'autres ingrédients en petites quantités, tels que des exhausteurs de goût, glutamate de sodium, nucléotides (inosinate et guanylate de sodium), maltol et éthylmaltol, etc. des arômes. Ces ingrédients font partie des "micro-ingrédients" qui peuvent entrer dans la formulation intermédiaire de l'aliment ou prémix qui peut contenir aussi des émulsifiants gélifiants, antioxydants conservateurs, colorants. Ces dernières substances sont généralement calculées pour être présentes à raison de 5 à 10 kg par tonne dans l'aliment final.

Le sucrant en poudre selon l'invention peut être préparé très simplement, selon une technologie bien connue en alimentation humaine et dans la technologie de fabrication des arômes, par "micronisation", c'est-à-dire par atomisation et séchage d'un mélange liquide, pulvérisé dans un appareil approprié. Cet appareil peut prendre la forme d'une tour dans laquelle le mélange liquide est admis au sommet par une buse ou une turbine, la poudre atomisée obtenue étant récoltée à la base de la tour. Dans certains cas, si cela s'avère nécessaire, la tour peut être remplie d'un gaz inerte pour éviter les phénomènes d'oxydation.

Le sucrant en poudre selon l'invention peut être utilisé de deux façons dans l'alimentation humaine. D'abord, d'une façon classique, le sucrant selon l'invention peut être dispersé sur un support du type dextrose, silice ou amidon par exemple à raison de 10 à 75 parties pondérales de sucrant pour 90 à 25 parties pondérales de support. Sur la base des valeurs usuelles, cela va permettre de constituer un aliment final à une dose moyenne de 300 à 3'000 g/t, de préférence 1'650 g/t, ce qui correspond à une quantité d'édulcorant de l'ordre de 150 à 1'500 g/t et de potentiateur de 0,15 à 15 g/t sur la base de la dose moyenne de 1'650 g/t. Il faut bien comprendre que, puisque le sucrant selon l'invention est parfaitement homogène et que la granulométrie de ce sucrant est suffisamment fine, il n'y aura évidemment aucune difficulté à obtenir une formulation sucrante sur support, puis un aliment final, eux aussi parfaitement homogène.

Une autre possibilité d'utiliser le sucrant selon l'invention est de le dissoudre dans les boissons non alcoolisées, notamment à raison de 3 à 5 g/l, ce sucrant en poudre étant soluble dans l'eau sans aucune difficulté.

Le mélange intime que constitue le sucrant selon l'invention assure une synergie optimale, l'association d'édulcorants intenses augmentant l'effet sucrant d'une valeur supérieure à la moyenne arithmétique de leur intensité sucrante. De plus, l'effet de synergie est optimal et constant alors qu'il est variable dans le cas d'un mélange statistique.

Les principaux domaines d'application concernés par les sucrants sont d'abord les produits laitiers tels que yogourts aromatisés, laits aromatisés, glaces, desserts frais ou congelés, poudings, mousses et crèmes ; ensuite les produits en poudre, notamment les crèmes, cacao, boissons aromatisées, desserts et glaces ; les boissons non alcoolisées, par exemple les boissons à base de fruits, les toniques, les boissons type Cola ; et aussi les confiseries, acidulés et gommes à mâcher (chewing-gums) bonbons et chocolats, ainsi que les édulcorants non caloriques de table.

D'une façon générale on utilisera plutôt les sucrants conférant un goût court, qui sont ceux qui ont une basse teneur en potentiateurs, pour des boissons alcoolisés et des édulcorants non caloriques de table. On privilégiera les sucrants conférant un goût long, qui sont ceux qui ont une haute teneur en potentiateurs, pour des confiseries, des produits laitiers et des desserts.

Il convient de mentionner ici que des potentiateurs tels que la NHDC et la thaumatine possèdent, en plus des propriétés potentiatrices, des effets amplificateurs de la perception. Ils agissent en quelque sorte comme exhausteurs de goût et contribuent à produire une sensation tactile buccale (plénitude en bouche) très agréable. Ils augmentent la perception de la flaveur dans les aliments dans lesquels ils sont introduits. De tels effets se manifestent déjà à partir de 0,1 ppm pour la NHDC et de 0,05 ppm pour la thaumatine.

L'invention sera mieux comprise en référence aux exemples ci-après, donnés à titre non limitatif. Ces exemples seront suivis d'exemples comparatifs destinés à mieux mettre en évidence les avantages de l'invention qui sont :
- un pouvoir sucrant régulier,
- la possibilité d'additionner des adjuvants en quantité elle aussi régulière,
- une excellente stabilité à la conservation, meilleure que celle des sucrants grossiers dont les deux poudres constitutives, de granulométries très différentes, ont au fil du temps tendance à la ségrégation ou à la sédimentation.

### EXEMPLES 1 A 7

On prépare une solution A d'un ou plusieurs édulcorants en introduisant 900 litres d'eau dans une cuve, puis en chauffant jusqu'à 60°C On ajoute ensuite lentement 1000 kg de ou des édulcorants, on agite la solution pendant 30 minutes jusqu'à la dissolution complète (la solution devient transparente).

Parallèlement, dans une petite cuve remplie de 100 litre d'eau chauffée jusqu'à 70°C, on ajoute lentement le ou les potentiateurs, en quantité correspondant à la proportion édulcorant/potentiateur désirée pour le sucrant en préparation, puis on laisser dissoudre le produit pendant 30 minutes.

On verse la solution de potentiateur(s) lentement dans la solution d'édulcorant(s)

Lorsque la solution devient transparente, on procède à l'opération d'atomisation-séchage (spray drying) dans une tour dont le conditions de travail sont les suivantes :
- Température de la solution :: 60°C
- Température d'air entrée :: 190°C
- Température d'air sortie :: 100°C
- Vitesse de rotation de la turbine d'atomisation :: 15'000 t/min. à 20'000 t/min, la turbine pouvant être remplacée par une buse d'atomisation.

On obtient ainsi un sucrant selon l'invention, se présentant sous forme d'une poudre fine homogène ayant une granulométrie à répartition gaussienne comprise entre 10 et 100 µm avec une moyenne de 48,5 µm et comprenant autour de 75'000'000 particules ou grains par gramme. Cette poudre est soluble dans l'eau.

On a ainsi réalisé les sucrants en poudre suivants, selon les édulcorants et les potentiateurs utilisés, et selon leur proportion exprimée en valeurs pondérales :

### EXEMPLES 1 à 5

| **EXEMPLES** | **EDULCORANTS** | **POTENTIATEURS** | **PROPORTIONS** |
|---|---|---|---|
| 1 | Saccharinate de sodium / Acésulfame-K | NHDC | 54/45,4/0,6 |
| 2 | Saccharinate de sodium / Aspartame | Thaumatine | 75/24,9/0,1 |
| 3 | Acésulfame-K / Saccharinate de sodium / | NHDC/Glycyrrhizine/Maltol | 37,4/62/0,3/0,1/0,2 |
| 4 | Acésulfame-K / Aspartame | NHDC/Glycyrrhizine | 67/32,5/0,3/0,2 |
| 5 | Saccharinate de sodium / Aspartame | | 85/15 |

Les exemples 1 et 2 sont spécialement destinés aux boissons à base de fruits, 3 et 4 aux boissons du type Cola et 5 aux édulcorants non caloriques de table. Ces édulcorants sont généralement dilués dans du dextrose, du fructose, du sorbitol, du mannitol pour permettre leur utilisation par dose de 1 g pour une tasse de café ou de thé.

### EXEMPLES 6 à 9

| **EXEMPLES** | **EDULCORANTS** | **POTENTIATEURS** | **PROPORTIONS** |
|---|---|---|---|
| 6 | Aspartame / Acésulfame | NHDC | 50/38/12 |
| 7 | Acésulfame-K / Saccharinate de sodium | Thaumatine | 40/58/2 |
| 8 | Saccharinate de sodium / Aspartame | NHDC/Glycyrrhizine/ | 65/28/5/2 |
| 9 | Saccharinate de sodium | Glycyrrhizine / Ethylmaltol | 90/5/5 |

La formulation selon l'exemple 6 est particulièrement appropriée pour la confection de gommes à mâcher ou le goût sucré le plus long possible est recherché. L'exemple 4 convient aux bonbons et aux chocolats.

La thaumatine utilisée dans les exemples 2 et 7 provient de la Société Hays Ingredients et est distribuée sous la marque Talin.

### EXEMPLES COMPARATIFS 1 ET 2

### 1

On mesure par granulométrie laser un échantillon de sucrant grossier 40/80 Mesh (référence) et on le compare à un sucrant selon l'invention, qui a été obtenu par le procédé de "micronisation" décrit ci-dessus.

A masses volumiques pratiquement égales, soit 1,5692 g/cm³ pour l'échantillon de référence et 1,5270 g/cm³ pour l'échantillon de l'invention selon l'exemple 1, on constate que ce dernier contient 75'563'288 particules par gramme contre 58'270 particules par gramme pour la référence.

### 2

On compare le sucrant grossier 40/80 Mesh de l'exemple comparatif ci-dessus au sucrant micronisé de l'exemple 2 en préparant tout d'abord avec ces deux sucrant des aliments granulés, identiques par ailleurs. Puis on prélève au hasard dans chacun d'eux le même nombre de granulés, qu'on analyse individuellement par chromatographie en phase liquide à haute performance, en recherchant le pic du saccharinate de sodium après l'avoir extrait par centrifugation dans l'eau avec un taux de dilution de 0,1 g pour 500 µl.

Les résultats, reportés sur le tableau ci-après, sont relatif aux aires des pics de saccharinate, et représentent leur concentrations. Ils montrent clairement la grande disparité dans la présence du saccharinate dans l'échantillon de référence, certains échantillons ne comprenant même pas de saccharinate du tout.

Ils montrent aussi et surtout la grande homogénéité dans la répartition du saccharinate chez le sucrant de l'exemple 2.

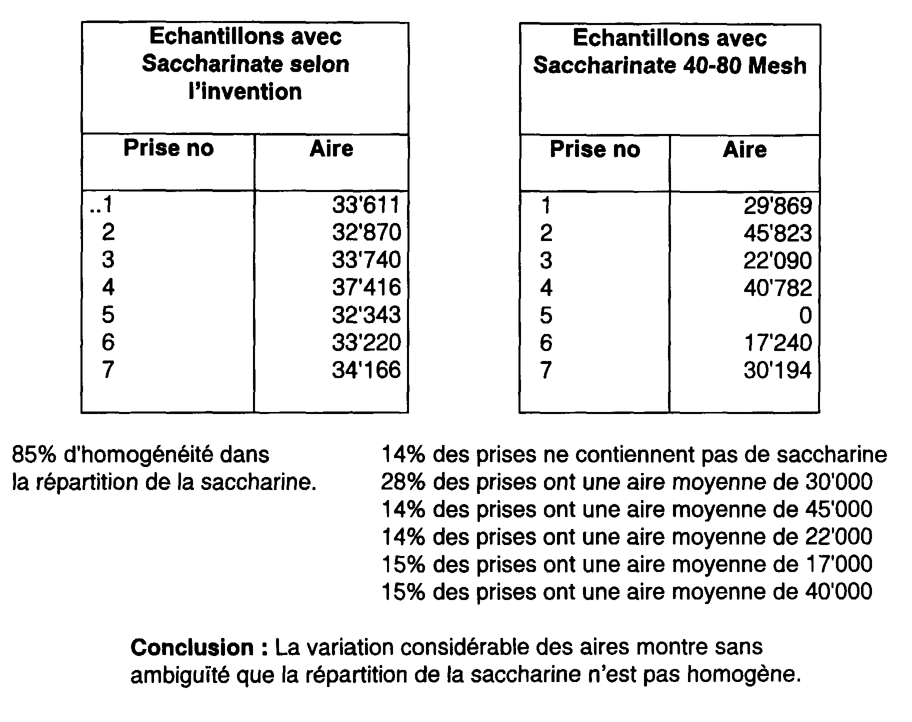

## Revendications

1. Sucrant en poudre pour alimentation humaine, caractérisé en ce qu'il se présente sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre.

2. Sucrant selon la revendication 1, caractérisé en ce qu'il a une granulométrie comprise entre 10 et 100 µm, avec une répartition gaussienne.

3. Sucrant selon la revendication 1 ou 2, caractérisé en ce que la proportion édulcorant/potentiateur(s) est comprise entre 99,95/0,05 et 85/15, valeurs exprimées en parties pondérales.

4. Sucrant selon la revendication 1, caractérisé en ce que l'édulcorant est choisi dans le groupe comprenant les saccharinates de sodium ou de calcium, la saccharine, l'aspartyl-phénylalanine, l'acésulfame, les cyclamates et le stévioside, et leurs mélanges.

5. Sucrant selon la revendication 1, caractérisé en ce que le potentiateur est choisi dans le groupe comprenant la thaumatine, la néohespéridine dihydrochalcone (NHDC), la glycyrrhizine, et leurs mélanges.

6. Sucrant selon la revendication 1, caractérisé en ce qu'il comprend également d'autres ingrédients choisi dans le groupe comprenant les exhausteurs de goût et les arômes.

7. Procédé de préparation du sucrant selon l'une des revendications précédentes, caractérisé en ce qu'on prépare un mélange en solution d'un édulcorant et d'un potentiateur, puis qu'on pulvérise ce mélange par atomisation séchage pour obtenir une poudre.

8. Formulation alimentaire sucrante en granulés, caractérisé en ce qu'elle comprend un sucrant selon l'une des revendications 1 à 6 dispersé sur un support du type dextrose, silice ou amidon à raison de 10 à 75 parties pondérales de sucrant pour 90 à 25 parties pondérales de support.

9. Utilisation de la formulation alimentaire sucrante selon la revendication 8 dans l'alimentation humaine.

10. Utilisation du sucrant en poudre selon l'une des revendications 1 à 6 par dissolution de celui-ci dans l'eau de boissons non alcoolisées, à raison de 3 à 5 g par litre de boisson.
